(19) **Europäisches Patentamt**

**European Patent Office**

**Office européen des brevets**

(11) **EP 0 839 614 B1**

(12) **EUROPEAN PATENT SPECIFICATION**

(45) Date of publication and mention
of the grant of the patent:
**26.03.2003 Bulletin 2003/13**

(51) Int Cl.[7]: **B25J 19/00**, B66C 23/00

(21) Application number: **97203365.8**

(22) Date of filing: **30.10.1997**

(54) **Manipulator**

Manipulator

Manipulateur

(84) Designated Contracting States:
**DE FR GB IT NL**

(30) Priority: **05.11.1996 NL 1004431**

(43) Date of publication of application:
**06.05.1998 Bulletin 1998/19**

(73) Proprietor: **Leenstra Machine- en Staalbouw B.V.**
**9206 AE Drachten (NL)**

(72) Inventor: **Schut, Paul Robert**
**9244 HJ Beesterzwaag (NL)**

(74) Representative:
**Smulders, Theodorus A.H.J., Ir. et al**
**Vereenigde**
**Postbus 87930**
**2508 DH Den Haag (NL)**

(56) References cited:
**EP-A- 0 733 579        WO-A-93/00285**
**DE-A- 4 415 518        FR-A- 2 386 473**
**US-A- 5 456 130**

## Description

The invention relates to a manipulator, comprising an actively force-generating member and means for transferring the generated force to the load.

Within the purview of the present invention, by the expression "manipulator" is meant an apparatus capable of exerting an upwardly directed force on a load, which force is substantially equal but opposite to the force exerted on that load by gravity, wherein vertical movements of the load are followed automatically, so that the load virtually behaves as being weightless. A person wishing to handle the load in question, such as for instance lifting and positioning, can then effect a desired displacement while exerting only a relatively slight force.

For lifting and putting down a load, various types of cranes or lifting apparatus are known, wherein the load can be lifted while suspending from a wire or resting on a platform, or gripped in a gripper. An example of a crane is a hoisting crane, an example of a lifting apparatus is a lift truck. In general, a hoisting crane comprises a hoisting wire wound on a drum which can be rotated by means of a motor. Associated with the motor is an operating panel, whereby the motor can be controlled so as to be in three different operating conditions: being stationary, rotating in one direction, and rotating in the other direction. For lifting the load, an operator must operate that operating panel: upon energization of the motor in a particular direction, the hoisting wire is wound onto the drum and the load is lifted; when the load has reached a particular desired height, the motor is stopped.

Thus, a crane has in fact only three operating conditions: UP, DOWN, and STATIONARY, selected through corresponding energization of the motor by means of the operating panel. Hence, the possibilities of a crane are fairly limited, which appears in particular in situations where the load should be put down in a specific position rather accurately, hence where at the same time a horizontal and a vertical displacement are desired. In horizontal direction, a suspending load can be displaced with relatively little force, but a vertical displacement cannot be effected by exerting manual effort on the load: as regards a displacement in the vertical direction downwards, the load is retained by the crane, and in the vertical direction upwards, the operator would have to lift the full weight of the load. Even if one succeeded in lifting the load by manual effort, the load would lower back again to the height determined by the crane when that manual effort were removed. Hence, for performing a vertical displacement, it is necessary that the operating panel be operated, which means that the operator must always keep minimally one hand on the operating panel. Consequently, in such cases, several persons are usually needed, viz. at least one for the horizontal displacement and one for the operation of the operating panel.

In addition, it is a drawback that with a crane it is not properly possible to effect a vertical displacement in an accurate manner, unless the motor is provided with a mechanism enabling several hoisting speeds.

An essential distinction between a manipulator and a crane is that a manipulator automatically follows a vertical displacement of the load, which vertical displacement can be realized through exerting a manual force on the load. In this regard, the manual force needed for effecting a vertical displacement is less than the weight (or, more correctly: mass times gravitational acceleration) of the load.

Such manipulators are known per se. These manipulators are always provided with means adapted for keeping the force generated by the force-generating member substantially constant, while in essence, the generated force or a parameter connected therewith is in each case measured.

A drawback of the known manipulators is that they are not accurate enough and/or exhibit a fairly substantial hysteresis. As a consequence, an operator must exert on the load a minimal manual force which is relatively great, before the manipulator reacts and a vertical displacement follows. Within the framework of the present invention, such minimal manual force will also be designated by the term "follow threshold".

Known manipulators have a fairly high follow threshold. More in particular, the minimal manual force required for effecting a vertical displacement is generally 5-10% (or more) of the weight of the load. On the one hand, in the case of heavy loads this means that the operator must still exert quite some force. On the other hand, within the framework of the legal prescriptions which set a maximum to forces to be exerted by persons, this means a limitation of the usability of known manipulators. In the Netherlands, the Working Conditions Act prescribes that persons are allowed to lift not more than 25 kg; if a manipulator has a follow threshold of 10%, this means that this manipulator can only be used for loads up to 250 kg.

Document US-A-5 456 130, which is considered as closest prior art, discloses a load balancing arm which responds to slight operator applied force to move the load. Upon an operator applied force, a handle engages switches, thereby indicating generally a direction of desired movement of the load.

The object of the invention is to overcome the above drawbacks.

In particular, the object of the present invention is to provide a manipulator having a relatively low follow threshold.

More in particular, the object of the present invention is to provide a manipulator which is usable for loads having a weight of up to 500 k, or even more.

More in particular, the object of the present invention is to provide a manipulator which automatically exerts the proper lifting force.

More in particular, the object of the present invention is to provide a manipulator which enables controlling the vertical speed by means of the magnitude of the manual force applied.

To that end, the apparatus according to the invention has the features as described in claim 1.

These and other aspects, features and advantages of the present invention will be clarified by the following description of a preferred embodiment of a manipulator according to the invention, with reference to the accompanying drawing, wherein:

> Fig. 1 schematically illustrates the operation of a known manipulator; and
> Fig. 2 schematically illustrates the operation of a manipulator according to the present invention.

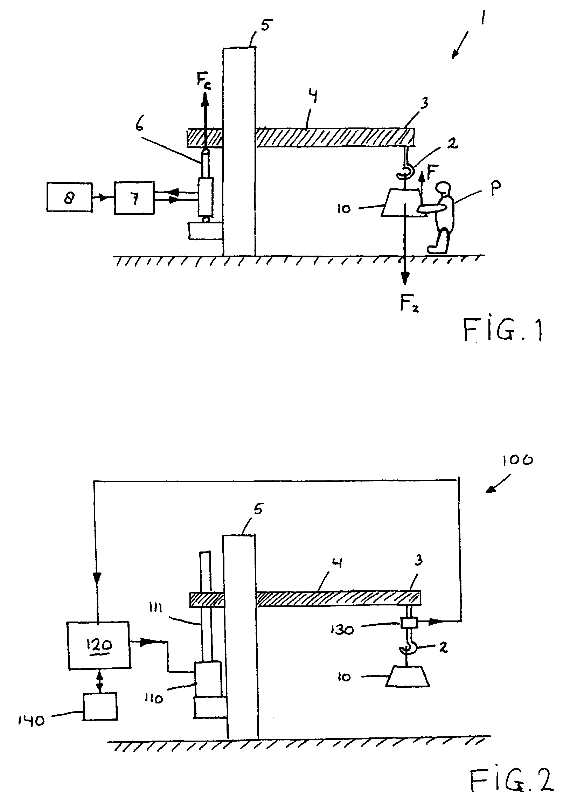

Fig. 1 schematically shows the principle of a known manipulator 1. A gripping member 2, which in the example illustrated is a hook, is mounted on an end 3 of an arm 4, which arm end 3 can be displaced vertically. In the example illustrated, the arm can as a whole be displaced vertically relative to a frame 5. Coupled between the arm 4 and the frame 5 is a force-generating member 6, which in the example illustrated is a hydraulic or pneumatic cylinder. Suspended from the gripping member 2 is a load 10, whose mass is M kg; the gravitational force $F_z$ acting on the load 10 is M g Newton, wherein g is the gravitational acceleration, which is about 10 m/s$^2$.

In balance, the piston 6 exerts on the arm 4 an upwardly directed compensating force $F_c$, whose magnitude is equal to $F_z$.

An operator P wishing to displace the load 10 vertically, exerts a manual force F on the load 10, which force is directed upwards if he wishes to lift the load 10. In theory, a small force would already be sufficient for moving the load 10 upwards, because then, $|F| + |F_c| > |F_z|$. However, in practice, the construction of the manipulator 1 always has some internal friction, which must be overcome first before the load 10 starts to move. This friction will be designated by $F_w$.

In formula form, this means that the load 10 does not start to move until it applies that: $|F| > |F_z| - |F_c| + |F_w|$.

If the load 10 then starts to move, this will result in a decrease of $F_c$. For a pneumatic cylinder 6, this can be conceived as follows. The cylinder 6 has a work space which contains compressed air having a particular working pressure D. The force $F_c$ exerted by the cylinder 6 is proportional to D. When the arm 4 is displaced through a given distance, a piston will move in that work space, causing the volume V of that work space to change by an amount $\Delta V$, wherein $\Delta V$ is proportional to the distance mentioned. According as the volume V of that work space increases or decreases, the pressure in that work space will decrease or increase respectively, with the product D V remaining constant. Accordingly, the force $F_c$ proportional to D will change as well.

The manipulator 1 comprises means aimed at causing the force $F_c$ generated by the cylinder 6 to be substantially constant. To that end, a control valve 7 is associated with the cylinder 6, which control valve is in turn coupled to a source 8 for compressed air. If the control valve 7 detects that the pressure in the work space of the cylinder 6 is less than a preset lower threshold, the control valve 7 admits air from the source 8 into that work space until that lower threshold has been reached. If the control valve 7 detects that the pressure in the work space of the cylinder 6 is higher than a preset upper threshold, the control valve 7 causes air to escape from the work space until that upper threshold has been reached. These upper and lower thresholds are not equal to each other. In practice, a deviation $\Delta D$ of 5-10% of the nominal pressure D may be necessary before the control valve reacts. In terms of percentage, this corresponds to a equally great variation $\Delta F_c$ of $F_c$. Here, $\Delta F_c$ is referred to as follow threshold. It will be understood that since in balance, $F_c$ equals $F_z$, the follow threshold $\Delta F_c$ can be expressed as percentage of $F_z$: $\Delta F_c = \gamma F_z$.

In formula form, this means that in practice, the known manipulator 1 can only actively follow the displacement of the load 10 when the displacement is so great that the following formula is met:

$$|F| > |F_z| - |(1-\gamma)F_z| + |F_w| \Rightarrow |F| > |\gamma F_z| + |F_w|.$$

Manipulators of the above-described type are also referred to as counter-balancing apparatus, because essentially, the force exerted by that apparatus is in balance with the gravitational force. EP-A-0.733.579 describes such counter-balancing apparatus, wherein the force-exerting members are formed by an electromotor. In the apparatus described in this publication, a weight-measuring member is present which measures the force exerted on the load and provides a measuring signal to a control member for the motor, wherein the control member is adapted to keep the force exerted on the load constant regardless of the frictional forces occurring in the manipulator.

A drawback of such counter-balancing apparatus is that when the load is for instance lifted by an operator, the weight sensor will detect a momentary weight decrease, and the counter-balancing apparatus will attempt to compensate this variation. As a consequence, an oscillation could be created, whereby the load could become resonant. As a matter of fact, this problem is recognized in the above publication, and a solution to this is sought by filtering the measuring signal.

A further drawback of such counter-balancing apparatus is that the accurate maneuvering of a load is rather difficult, because first an upward force must be exerted in order to have the load move in an upward direction, no force is exerted during the movement, and subsequently, a downward force must be exerted in the neighborhood of the destination to brake the moving load.

The present invention provides a manipulator which does not have this problem. As will be described in more detail hereinbelow, the manipulator according to the present invention reacts to an upward force by actively lifting the load, and to a downward force by actively lowering the load, in that a greater or, respectively, smaller lifting force is exerted in response to the detection of a weight decrease or a weight increase. During the movement, the user will then exert a force constantly, which comes across as much more natural, and the movement will stop when the user removes his manual effort.

Fig. 2 schematically illustrates the principle of a manipulator 100 according to the present invention. In. this Figure, parts identical to or comparable with those in Fig. 1 are designated by identical reference numerals.

The manipulator 100 according to the present invention comprises an electric motor 110, a control unit 120, and a weight sensor 130. Between the frame 5 and the arm 4, transmission means 111 are coupled, which are driven by the electric motor 110 to effect a vertical displacement of the arm 4 relative to the frame 5. Those transmission means 111 can be any suitable means, and may be known per se. They may for instance comprise a threaded shaft which engages in a portion of the arm 4 provided with a corresponding screw thread, as will be readily understood by anyone skilled in the art.

The electric motor 110 is of a type which can exert a fairly large force during standstill or a very small rotational speed of its driven shaft. An example of such motor is a brake motor, for which a three-phase asynchronous motor with frequency control can be used. As the construction of such motor, and the control thereof, do not constitute a subject of the present invention, and a skilled person need not have knowledge thereof for a proper understanding of the present invention, while a motor having the above-mentioned characteristics is known per se and can be used in the manipulator according to the present invention, they will not be further described. It suffices to observe that the motor comprises a braking device which, during standstill of the motor, retains the driven shaft in such a manner that no electric energy is then used. As soon as a rotation of the motor is required, that braking device is switched off.

The motor 110 is controlled by the control unit 120, which can for instance contain a suitably programmed processor or microcomputer, as will be understood by a skilled person.

The weight sensor 130 is arranged between the arm 4 and the gripping member 2. If so desired, the weight sensor 130 may form part of the arm 4 or the gripping member 2. The weight sensor 130 is adapted to generate an electric signal representative of the vertical force exerted on the arm 4 by the load 10 (and the gripping member 2). More in particular, referring to Fig.

1, the electric signal generated by the weight sensor 130 is representative of the vertical component of the vector sum of the gravitational force $F_2$ and the manual force F. An example of such sensor is a strain gauge, as will be understood by a skilled person. A signal output of the sensor 130 is connected to a signal input of the control unit 120.

According to an essential aspect of the present invention, it is possible, because of the selected position of the sensor 130, to have the motor 110 accurately react to small changes in the manual effort exerted by the operator on the load (or the gripping member), so that the operator can handle that load with only a slight force.

The operation of the manipulator 100 is as follows.

The gripping member 2 is coupled to the load 10, and a starting command is given to the control unit 120. The control unit 120 is adapted to cause, in response to the starting command, the motor 110 to exert an increasing force $F_c$. Initially, the load 10 rests for instance on the floor of a work space, and the weight detected by the sensor 130 is zero. According as the force $F_c$ increases, the weight detected by the sensor 130 increases as well, which is detected by the control unit 120. When $F_c$ is precisely of such magnitude that $F_z$ is compensated, the result of a further increasing force $F_c$ will be that the arm 4 and, accordingly, the motor 110 start to move, while the weight detected by the sensor 130 remains constant. The control unit 120 is adapted to store, when such a condition is reached, the magnitude of the corresponding sensor signal in a memory 140 associated with the control unit 120, and to keep the motor stationary. To that end, the control unit 120 can react to the motor 110 starting to move and/or to the weight, detected by the sensor 130, not increasing any further.

The above-described automatic setting procedure is independent of the weight of the load 10, which means an increased control convenience to the user.

As mentioned, the signal of the sensor 130 as received by the control unit 120 is representative of the weight of the load 10. In a preferred embodiment of the manipulator 100, the control unit 120 is adapted to show on a display (not illustrated for simplicity's sake) the weight corresponding to that signal.

It is observed that keeping the motor 110 stationary can be achieved by controlling the motor with a constant current in order to have the motor exert a constant torque. However, this takes much energy. For that reason, preferably, a motor having a braking device is used, and keeping the motor stationary is achieved by controlling that braking device. Hence, the compensating force $F_c$ is then produced by that braking device.

The control circuit defined by the motor 110, the control unit 120 and the sensor 130 has two important features. In the first place, the control unit 120 keeps the motor 110 stationary as long as the force detected by the sensor 130 corresponds to the value stored in the memory 140, with the magnitude of $F_c$ playing no part. Conventional systems, on the other hand, intend to keep the magnitude of $F_c$ constant.

In the second place, the control unit 120 is adapted to react to changes in the signal generated by the sensor 130. When a force F is exerted on the load 10 by an operator, a change is caused in the signal generated by the sensor 130. The control unit 120 is adapted to compare the sensor signal continuously with the value stored in the memory 140. When the difference between the sensor signal and the value stored in the memory 140 is greater than a preset reaction threshold, that difference is regarded by the control unit 120 as a control command.

The above reaction threshold can have a constant value, or can be a percentage of the value stored in the memory 140. Preferably, this reaction threshold can be set by a user, within certain limits.

The control unit 120 is adapted to drive the motor 110 for rotation, in response to the above control command, with the direction of rotation depending on the sign of this difference between the sensor signal and the value stored in the memory 140. For instance, if an operator exerts an upwardly directed force on the load 110, the force detected by the sensor 130 is smaller than the force associated with the value stored in the memory 140: in that case, the motor 110 is driven for an upward displacement of the arm 4.

In this manner, the manual effort exerted by the operator does not primary serve to displace the load 10, but to generate, via the sensor 130, a control signal for the control unit 120. Because of the great sensitivity of such sensors, it is possible to detect relatively small manual forces. This means that it is possible to handle fairly heavy loads with relatively small forces. By way of example, it is possible to handle a load of 500 k with a manual force of 1 k.

The rotational speed of the motor 110 may be independent of the magnitude of the difference between the sensor signal and the value stored in the memory 140. However, by way of preference, the rotational speed of the motor 110 is, within certain limits, proportional to the magnitude of the difference between the sensor signal and the value stored in the memory 140. In an exemplary embodiment, the linear (vertical) displacement speed of the arm is 2 cm/s at a manual force of 1 k, and 20 cm/s at a manual force of 10 k.

It will be understood that the above-described operation of the control unit 120 can be established by a fixed programming (hardware), but also by means of a changeable programming (software).

A further advantage of the manipulator 100 according to the present invention is that no use is made of hydraulic or pneumatic cylinders, whereby an environmental problem formed by oil has been reduced. Further, the manipulator 100 according to the present invention is much more efficient in terms of energy.

It will be readily understood by anyone skilled in the art that the protective scope of the present invention as defined by the claims is not limited to the embodiments shown in the drawing and discussed, but that it is possible to change or modify the embodiments shown of the manipulator according to the invention within the framework of the inventive concept defined by the claims. For instance, it is possible that the arm 4 comprises one or more pivots to cause the end 3 of the arm 4 to make a horizontal displacement. It is also possible that the arm 4, instead of being vertically displaced as a whole, makes a vertical pivotal movement relative to the frame 5.

**Claims**

1. A manipulator (100), comprising:

   a frame (5);
   an arm (4) which can be moved vertically relative to the frame (5);
   a gripping member (2) attachable to an end (3) of the arm (4);
   transmission means (111) coupled between the frame (5) and the arm (4), for effecting a vertical displacement of the arm (4);
   a motor (110) for driving the transmission means (111);
   a control unit (120) for controlling the electromotor (110), which control unit (120) comprises a memory (140);
   a weight sensor (130) associated with the gripping member (2) and adapted to generate a measuring signal representative of the magnitude of the vertical force acting on the gripping member (2); and

   wherein a signal output of the sensor (130) is coupled to a signal input of the control unit (120), **characterized in that**, said motor (110) is an electromotor, and the control unit (120) is adapted to compare, in an operating mode, the value of the signal generated by the sensor (130) with a value stored in the memory (140), and that the control unit (120) is adapted to drive the motor (110) for rotation when the measured difference is more than a preset reaction threshold, wherein the direction of rotation is such that the arm (4) actively lifts a load when the measured weight is less than the value stored in the memory (140), while the arm (4) actively lowers a load when the measured weight is more than the value stored in the memory (140).

2. A manipulator according to claim 1, wherein the control unit (120) is adapted to compare, in an operating mode, the value of the signal generated by the sensor (130) with the value stored in the memory (140), and to keep the motor (110) stationary when the measured difference is less than the preset reaction threshold.

3. A manipulator according to claim 1 or 2, wherein the control unit (120) is adapted to control the rotational speed of the motor (110) in proportion to the magnitude of the measured difference between the signal generated by the sensor (130) and the value stored in the memory (140).

4. A manipulator according to any one of claims 1-3, wherein said reaction threshold is settable and is preferably about 1 kg.

5. A manipulator according to any one of the preceding claims, wherein the control unit (120) is adapted to increase, in response to an initiation command, the power of the motor (110) until the force measured by the sensor (130) no longer increases, and then to store the value of the signal generated by the sensor (130) in the memory (140).

6. A manipulator according to any one of claims 1-4, wherein the control unit (120) is adapted to increase, in response to an initiation command, the power of the motor (110) until the motor (110) starts to move from standstill, and then to store the value of the signal generated by the sensor (130) in the memory (140).

**Patentansprüche**

1. Ein Manipulator bzw. Roboter (100), welcher aufweist:

ein Gestell bzw. einen Frame (5);
einen Arm (4), welcher vertikal in Bezug auf das Gestell bzw. den Frame (5) bewegt werden kann;
ein Greifteil (2), welches an einem Ende (3) des Arms (4) befestigbar ist;
eine Kraftübertragungseinrichtung (111), welche zwischen das Gestell bzw. dem Frame (5) und den Arm (4) gekoppelt ist, um eine vertikale Verlagerung bzw. einen vertikalen Hub des Arms (4) zu bewirken;
einen Motor (110) zum Antreiben der Kraftübertragungseinrichtung (111);
eine Steuereinheit (120) zum Steuern des Elektromotors (110), welche Steuereinheit (120) einen Speicher (140) aufweist;
einen Gewichtssensor bzw. -fühler (130), welcher dem Greifteil (2) zugeordnet ist und eingerichtet ist, ein Messsignal zu erzeugen, welches der Größe der Vertikalkraft, welche auf das Greifteil (2) wirkt, entspricht; und

wobei ein Signalausgang des Sensors bzw. Fühlers (130) an einen Signaleingang der Steuereinheit (120) gekoppelt wird,

**dadurch gekennzeichnet, dass** der besagte Motor (110) ein Elektromotor ist und dass die Steuereinheit (120) dazu eingerichtet ist, im Betriebsmodus den Wert des durch den Sensor bzw. Fühler (130) erzeugten Signals mit einem Wert zu vergleichen, welcher in dem Speicher (140) gespeichert ist, und dass die Steuereinheit (120) so eingerichtet ist, dass der Motor (110) zur Drehung angetrieben wird, wenn die gemessene Differenz größer als ein voreingestellter Reaktionsschwellenwert ist, wobei die Richtung der Drehung derart ist, dass der Arm (4) aktiv eine Last anhebt, wenn das gemessene Gewicht geringer als der in dem Speicher (140) gespeicherte Wert ist, während der Arm (4) aktiv eine Last absenkt, wenn das gemessene Gewicht größer als der in dem Speicher (140) gespeicherte Wert ist.

2. Ein Manipulator bzw. Roboter gemäß Anspruch 1, wobei die Steuereinheit (120) geeignet ist, um in einem Betriebsmodus den Wert des durch den Sensor (130) erzeugten Signals mit dem in dem Speicher (140) gespeicherten Wert zu vergleichen und den Motor (110) stillstehend bzw. stationär zu halten, wenn die gemessene Differenz geringer als der voreingestellte Reaktionsschwellenwert ist.

3. Ein Manipulator bzw. Roboter gemäß Anspruch 1 oder 2, wobei die Steuereinheit (120) geeignet ist, die Drehgeschwindigkeit bzw. Drehzahl des Motors (110) im Verhältnis zu der Größe der gemessenen Differenz zwischen dem durch den Sensor bzw. Fühler (130) erzeugten Signal und dem in dem Speicher (140) gespeicherten Wert zu steuern.

4. Ein Manipulator bzw. Roboter gemäß irgendeinem der Ansprüche 1 bis 3, wobei der besagte Reaktionsschwellenwert einstellbar ist und vorzugsweise etwa 1 kg ist.

5. Ein Manipulator bzw. Roboter gemäß irgendeinem der vorhergehenden Ansprüche, wobei die Steuereinheit (120) geeignet ist, um in Abhängigkeit von einem Initiierungs- bzw. Auslösungsbefehl die Leistung des Motors zu erhöhen, bis die durch den Sensor bzw. Fühler (130) gemessene Kraft nicht mehr zunimmt und dann den Wert des durch den Sensor bzw. Fühler (130) erzeugten Signals in dem Speicher (140) zu speichern.

6. Ein Manipulator bzw. Roboter gemäß irgendeinem der Ansprüche 1 bis 4, wobei die Steuereinheit (120) so eingerichtet ist, dass in Abhängigkeit von dem Initiierungs- bzw. Auslösungsbefehl die Leistung des Motors (110) gesteigert wird, bis der Motor (110) beginnt, sich aus dem Stillstand bzw. dem stationären Zustand zu bewegen und dann den Wert des durch den Sensor bzw. Fühler (130) erzeugten Signals in dem Speicher (140) zu speichern.

## Revendications

1. Manipulateur (100) comprenant:

   un châssis (5);
   un bras (4) pouvant être déplacé verticalement par rapport au châssis (5);
   un organe de préhension (2) pouvant être fixé à une extrémité (3) du bras (4);
   des moyens de transmission (111) couplés entre le châssis (5) et le bras (4) pour réaliser un déplacement vertical du bras (4);
   un moteur (110) pour entraîner les moyens de transmission (111);
   une unité de commande (120) pour commander le moteur électrique (110), laquelle unité de commande (120) comprend une mémoire (140);
   un détecteur de poids (130) associé à l'organe de préhension (2) et adapté pour produire un signal de mesure représentatif de l'intensité de la force verticale agissant sur l'organe de préhension (2); et
   dans lequel un signal délivré par le capteur (130) est couplé à un signal envoyé à l'unité de commande (120),

   **caractérisé en ce que** ledit moteur (110) est un moteur électrique, et l'unité de commande (120) est adapté pour comparer, dans un mode de fonctionnement, la valeur du signal produit par le capteur (130) à une valeur mémorisée dans la mémoire (140), et que l'unité de commande (120) est adaptée pour entraîner le moteur (110) en rotation lorsque la différence mesurée est supérieure à un seuil de réaction préréglé, le sens de rotation étant tel que le bras (4) soulève activement une charge lorsque le poids mesuré est inférieur à la valeur mémorisée dans la mémoire (140), tandis que le bras (4) est abaissé activement à une charge lorsque le poids mesuré est supérieur à la valeur mémorisée dans la mémoire (140).

2. Manipulateur selon la revendication 1, dans lequel l'unité de commande (120) est adaptée pour comparer, dans un mode de fonctionnement, la valeur du signal produit par le capteur (130) à la valeur mémorisée dans la mémoire (140) et de maintenir le moteur arrêté (110) lorsque la différence mesurée est inférieure au seuil de réaction préréglé.

3. Manipulateur selon la revendication 1 ou 2, dans lequel l'unité de commande (120) est adaptée pour commander la vitesse de rotation du moteur (110) proportionnellement à l'amplitude de la différence mesurée entre le signal produit par le capteur (130) et la valeur mémorisée dans la mémoire (140).

4. Manipulateur selon l'une quelconque des revendications 1 à 3, dans lequel ledit seuil de réaction est réglable et est égal de préférence à environ 1 kg.

5. Manipulateur selon l'une quelconque des revendications précédente, dans lequel une unité de commande (120) est adaptée pour augmenter, en réponse à une commande de déclenchement, la puissance du moteur (110) jusqu'à ce que la force mesurée par le capteur (130) n'augmente plus, puis mémoriser la valeur du signal produit par le capteur (130) dans la mémoire (140).

6. Manipulateur selon l'une quelconque des revendications 1 à 4, dans lequel l'unité de commande (120) est adaptée pour augmenter, en réponse à une commande déclenchement, la puissance du moteur (110) jusqu'à ce que le moteur (110) démarre à partir de l'état d'arrêt, puis mémoriser la valeur du signal produit par le capteur (130) dans la mémoire (140).

FIG.1

FIG.2